(19) Europäisches Patentamt

European Patent Office

Office européen des brevets

(11) EP 0 736 079 B1

(12) EUROPEAN PATENT SPECIFICATION

(45) Date of publication and mention
of the grant of the patent:
**10.05.2000 Bulletin 2000/19**

(21) Application number: **95904910.7**

(22) Date of filing: **13.12.1994**

(51) Int. Cl.[7]: **C10G 45/04**

(86) International application number:
**PCT/US94/14412**

(87) International publication number:
**WO 95/17482 (29.06.1995 Gazette 1995/27)**

(54) **HYDROGENATION PROCESS**

HYDRIERVERFAHREN

PROCEDE D'HYDROGENATION

(84) Designated Contracting States:
**BE DE FR GB IT NL**

(30) Priority: **20.12.1993 US 169109**

(43) Date of publication of application:
**09.10.1996 Bulletin 1996/41**

(73) Proprietor:
**MOBIL OIL CORPORATION
Fairfax, Virginia 22037-0001 (US)**

(72) Inventors:
• **BAKER, Charles Lambert, Jr.
Thornton, PA 19373 (US)**
• **CHU, Cynthia Ting-Wah
Discovery Bay Hong-Kong (HK)**
• **HATZIKOS, George Harry
West Deptford, NJ 08051 (US)**
• **MAZZONE, Dominick Nicholas
Wenonah, NJ 08090 (US)**
• **SOCHA, Richard Francis
Newtown, PA 18940 (US)**

(74) Representative: **Kador & Partner
Corneliusstrasse 15
80469 München (DE)**

(56) References cited:
**WO-A-93/02157        US-A- 5 134 241
US-A- 5 227 353        US-A- 5 264 641
US-A- 5 290 744**

## Description

This invention relates to a process for preparing food grade white oils.

There is a significant commercial demand for oils known as food grade mineral oils, or white oils. In addition to food preparation, they are also used in the manufacture of paper and textiles. Such oils also have medicinal uses. These oils are referred to as "white", but they are actually colorless or very light in color.

The preparation of white oils is well-known. These oils have stringent API gravity and viscosity requirements. They must have an API gravity between 29 and 32. The kinematic viscosity of white oils is between 10 and 600 cS at 56°C (100°F). The Saybolt Universal Viscosity of white oils which is the preferred viscosity range is between 26 and 140 (76-296 cS) at 56°C (100°F). The most preferred viscosities are in the lower end of this range. The flash point is between 125 and 195°C (260 and 380°F). The boiling range of white oil is between 260 and 705°C (500°F and 1300°F). White oils must meet or exceed strict test requirements on sulfur, readily carbonizable substances and ultraviolet absorbance. The standards for white oil which may be safely used in food are established by the Food and Drug Administration and are set forth in 21 CFR §172.878.

White oils are generally produced by the hydrogenation or hydrotreating of lubricant oils under severe conditions. Hydrogenation is a well-established process both in the chemical and petroleum refining industries. Hydrogenation is conventionally carried out in the presence of a catalyst which usually comprises a metal hydrogenation component on a porous support material, such as a natural clay or a synthetic oxide. Metals such as nickel, platinum, palladium and combinations of metals are often used. Typical support materials include kieselguhr, alumina, silica and silica-alumina. Depending upon the ease with which the feed may be hydrogenated, the hydrogen pressures used may vary from quite low to very high values, typically from 3550 to 21,000 kPa (500 to 3,000 psig). Hydrogenation is an exothermic process and is therefore thermodynamically favored by lower temperatures but for kinetic reasons, moderately elevated temperatures are normally used and for petroleum refining processes, temperatures in the range of 120 to 370°C (250° to 700°F) are typical. Space velocity may range from 0.1 to 2.0 LHSV.

Hydrogenative treatment is frequently used in petroleum refining to improve the qualities of lubricating oils, both of natural mineral oil and synthetic origin. Hydrogenation, or hydrotreating as it is frequently termed, is used to reduce any residual unsaturation in the lubricating oil, to remove heteroatom-containing impurities and color bodies. In mineral oils, the removal of impurities and color bodies is of particular significance, especially for mineral oils which have been subjected to hydrocracking or catalytic dewaxing. For both mineral and synthetic stocks, the saturation of lube boiling range olefins or aromatics is a major objective.

White oils have traditionally been prepared by hydrotreating the lubricant oil fraction of the hydrocracker effluent under conditions of extreme severity, i.e., high pressures and low space velocities. Hydrotreating units often operate at metallurgical pressure limits and low throughputs to produce white oils. The prior art discloses the preparation of white oils using hydrogenation techniques. In many of these cases the catalyst employed comprises Pt or Pd combined in some manner with a non-acidic refractory inorganic oxide material such as alumina. Nickel in some cases may also be employed as the hydrogenation component. U.S. Patent No. 5,057,206 discloses the production of a white oil from a heavy alkylate feedstock possessing hydrogenatable components. The catalyst employed is a Pt group metal compound that has been surface impregnated upon an alumina support.

U.S. Patent No. 4,240,900 discloses a process for the hydrogenation of olefins and aromatic compounds, useful in the production of white oils, employing a zeolite-containing catalyst that has been treated with a hydrocarbon stream relatively high in organic nitrogen compounds in order to suppress its cracking activity. Nickel is a preferred hydrogenation component in this patent.

U.S. Patent No. 3,926,777 combines hydrogenation with solvent dewaxing to produce a colorless mineral oil with good hazing properties. This patent involves more than one hydrogenation step with more than one catalyst. The catalysts comprise a combination of a Group VIB metal and a Group VIII metal on a non-acidic or weakly acidic support, and a Group VIII metal alone on a non-acidic or weakly acidic support.

The catalysts used for hydrogenating lubricants, whether of mineral or of synthetic origin, require a strong hydrogenation function provided by the metal component and large pore diameters in the porous support material in order to minimize the diffusion resistance of the bulky lubricant molecules. For reactions with bulky molecules, the optimum ratio of catalytic pore diameter to molecule size is about 1.5:1. Table 1 below shows the optimum pore sizes required for normal alkanes in the C-7 to C-25 range. The table shows that for alkanes in this range, the chain-length varies from 9.9 to 37.6 Å so that active hydrogenation catalysts for these materials should have a major amount of their pore volume with pore openings in the range of 15 to 56 Å, and preferably with a major amount of this in the range 38 to 56 Å.

TABLE 1

| OPTIMUM PORE SIZE | | |
|---|---|---|
| Carbon Number | Alkane Length, Å [1] | Optimum Pore Diameter, Å [2] |
| $C_7$ | 9.9 | 15 |
| $C_8$ | 11.5 | 17 |
| $C_{10}$ | 14.5 | 22 |
| $C_{12}$ | 17.6 | 26 |
| $C_{17}$ | 25.3 | 38 |
| $C_{19}$ | 28.4 | 43 |
| $C_{21}$ | 31.5 | 47 |
| $C_{23}$ | 34.6 | 52 |
| $C_{25}$ | 37.6 | 56 |

1. Based on bond lengths of 1.54 and 1.11 Å for C-C and C-H bond lengths, respectively.
2. Based on an optimum ratio of catalyst pore to molecule size ratio of 1.5.

Conventional amorphous support materials such as alumina, silica and silica-alumina, typically have a pore size distribution with most of the pores larger than 50 Å and most of these are larger than 100 Å. Although these large pores enable the bulky lubricant molecules to traverse the molecular structure of the catalyst freely with little diffusion resistance, the reduced surface area associated with the larger pore sizes diminishes the area which is available for the hydrogenation reactions. It would therefore be desirable to utilize a hydrogenation catalyst which posses a significant amount of its pores in the range of 15 to 60 Å, close to the optimum ratio for the lower molecular weight materials making up the bulk of many synthetic lubricants as well as the lower viscosity mineral oils.

As stated previously, hydrotreating units commonly operate at metallurgical pressure limits and low throughputs to produce white oils. Operation at high seventies is quite expensive. Furthermore, if the hydrogenation catalyst is nickel-based rather than based on a noble metal, the catalyst can be irreversibly poisoned by sulfur.

As is indicated by the prior art, many hydrotreating units employ nickel based catalysts. Such catalysts have low sulfur tolerances relative to noble metals. Furthermore, nickel catalysts require special handling and disposal methods due to their toxic nature. A noble metal catalyst may be potentially regenerated and reused. Ability to operate at higher throughput or lower pressures (i.e., lower severity) can result in savings by debottlenecking existing units or lowering metallurgical requirements and capital cost for grass roots designs.)

We have now found that another class of catalytic materials, the mesoporous crystalline materials (known collectively as M41S) which have high pore volume, high surface area and controlled pore openings of at least 13 A, is particularly suitable for the hydrogenation of lubricant hydrocarbons for the production of food grade white oils. These catalysts are disclosed in U.S. Patent Nos. 5,108,725 (Beck et al), 5,102,643 (Kresge et al) and 5,098,684 (Kresge et al). Hydrogenation employing mesoporous crystalline materials has now been found to provide white oil of equal or superior quality and equal or superior yield at less severe conditions than hydrogenation employing catalysts of the prior art. The incorporation of noble metals on mesoporous crystalline catalysts has also produced an improvement in noble metal activity beyond that seen when these metals were incorporated onto catalysts of the prior art. It has also been found that the level of aromatics in the white oil product can be substantially reduced when noble metals incorporated onto mesoporous crystalline catalysts are used as opposed to noble metals on alumina catalyst, as the examples below illustrate.

According to the present invention, therefore, there is provided a process for preparing a food grade white oil, said process comprising contacting an aromatics-containing hydrotreated mineral oil fraction, resulting from atmospheric or vacuum distillation of crude oil, under severe conditions, in the presence of hydrogen, with a catalyst comprising up to 1 wt% of palladium supported on an extruded mixture of alumina and an inorganic, non-layered, porous, crystalline phase material having pores with diameters of at least 13Å and exhibiting, after calcination, an x-ray diffraction pattern with at least one d-spacing greater than about 18Å with a relative intensity of 100, said severe conditions including a temperature in the range 121 to 371°C (250-700°F), a pressure in the range 35.5-207.9 bar (500-3000 psig) and a liquid hourly space velocity of 0.1-2.0 hr$^{-1}$, and withdrawing a product containing less aromatics than said mineral oil fraction and having an API gravity of 29-32 and a kinematic viscosity in the range 10-600 cS at 37.7°C (100°F).

In a preferred form, the support material is characterized by a substantially uniform hexagonal honeycomb microstructure with uniform pores having a cell diameter greater than 13 Å and typically in the range of 20 to 100 Å. Most prominent among these materials is a new crystalline material identified as MCM-41 which is usually synthesized as a metallosilicate with Brønsted acid sites by incorporating a tetrahedrally coordinated trivalent element such as Al, Ga, B, or Fe within the silicate framework. The preferred forms of these materials are the aluminosilicates although other metallosilicates may also be utilized.

A preferred catalyst for the present purpose is an alumina bound crystalline material which has a significant pore volume with pore diameters greater than 200 Å. The large diameter pores provide channels for bulky lubricant molecules to transport freely with diminished diffusion resistance to the smaller particles of the crystalline material which provide a large surface area for the hydrogenation reaction. The preferred crystalline materials for use in the present process have pore diameters greater than 15 Å and the preferred pore diameters are in the range of 15 to 60 Å. The crystalline (i.e. meant here as having sufficient order to provide, after calcination, a diffraction pattern with at least one peak by, for example, X-ray, electron or neutron diffraction) support material of this invention is generally "mesoporous", by which is meant that the material has uniform pores of diameter within the range of 1.3 to 20 nm. More preferably, the materials of the invention have uniform pores of diameter within the range 1.8 to 10 nm. In this respect, pore size is considered as the maximum perpendicular cross-sectional dimension of the pore.

The support material of the present invention can be distinguished from other porous inorganic solids by the regularity of its large open pores, whose size more nearly resembles that of amorphous or paracrystalline materials, but whose regular arrangement and uniformity of size (pore size distribution within a single phase of, for example, ± 25%, usually ± 15% or less of the average pore size of that phase) more closely resemble those of crystalline framework materials such as zeolites.

In the preferred arrangement, the porosity of the crystalline support material of the invention is provided by a generally hexagonal arrangement of open channels, a property that can be readily observed by electron diffraction and transmission electron microscopy. In particular, the transmission electron micrograph of properly oriented specimens of the material show a hexagonal arrangement of large channels and the corresponding electron diffraction pattern gives an approximately hexagonal arrangement of diffraction maxima. The $d_{100}$ spacing of the electron diffraction patterns is the distance between adjacent spots on the hkO projection of the hexagonal lattice and is related to the repeat distance $a_0$ between channels observed in the electron micrographs through the formula $d_{100} = a_0 \sqrt{3}/2$ . This $d_{100}$ spacing observed in the electron diffraction patterns corresponds to the d-spacing of a low angle peak in the X-ray diffraction pattern of the material. The most highly ordered preparations of the material obtained so far have 20-40 distinct spots observable in the electron diffraction patterns. These patterns can be indexed with the hexagonal hkO subset of unique reflections of 100, 110, 200, 210, etc., and their symmetry-related reflections.

In this respect, it is to be understood that the reference to a hexagonal arrangement of channels is intended to encompass not only mathematically perfect hexagonal symmetry but also an an arrangement in which most channels in the material are surrounded by six nearest neighbor channels at substantially the same distance. Defects and imperfections will cause significant numbers of channels to violate this criterion to varying degrees. Samples which exhibit as much as ± 25% random deviation from the average repeat distance between adjacent channels still clearly give recognizable images of the present ultra-large pore materials.

In its calcined form, the crystalline support material of the invention may be further characterized by an X-ray diffraction pattern with at least one peak at a position greater than about 1.8 nm d-spacing (4.909 degrees two-theta for Cu K-alpha radiation) which corresponds to the $d_{100}$ value of the electron diffraction pattern of the material.

More preferably, the calcined crystalline support material of the invention is characterized by an X-ray diffraction pattern with at least two peaks at positions greater than about 1 nm d-spacing (8.842 degrees two-theta for Cu K-alpha radiation), at least one of which is at a position greater than 1.8 nm d-spacing, and no peaks at positions less than 1 nm d-spacing with relative intensity greater than about 20% of the strongest peak. Still more particularly, the X-ray diffraction pattern of the calcined material of this invention has no peaks at positions less than 1 nm d-spacing with relative intensity greater than about 10% of the strongest peak. In the preferred hexagonal arrangement, at least one peak in the X-ray pattern will have a d-spacing corresponding to the $d_{100}$ value of the electron diffraction pattern of the material.

X-ray diffraction data referred to herein were collected on a Scintag PAD X automated diffraction system employing theta-theta geometry, Cu K-alpha radiation, and an energy dispersive X-ray detector. Use of the energy dispersive X-ray detector eliminated the need for incident or diffracted beam monochromators. Both the incident and diffracted X-ray beams were collimated by double slit incident and diffracted collimation systems. The slit sizes used, starting from the X-ray tube source, were 0.5, 1.0, 0.3 and 0.2 mm, respectively. Different slit systems may produce differing intensities for the peaks. The materials of the present invention that have the largest pore sizes may require more highly collimated incident X-ray beams in order to resolve the low angle peak from the transmitted incident X-ray beam.

The diffraction data were recorded by step-scanning at 0.04 degrees of two-theta, where theta is the Bragg angle, and a counting time of 10 seconds for each step. The interplanar spacings, d's, were calculated in nanometers (nm), and the relative intensities of the lines, $I/I_O$, where $I_O$ is one-hundredth of the intensity of the strongest line, above background, were derived with the use of a profile fitting routine. The intensities were uncorrected for Lorentz and polarization effects. The relative intensities are given in terms of the symbols vs = very strong (75-100), s = strong (50-74), m = medium (25-49) and w = weak (0-24). It should be understood that diffraction data listed as single lines may consist of multiple overlapping lines which under certain conditions, such as very high experimental resolution or crystallographic changes, may appear as resolved or partially resolved lines. Typically, crystallographic changes can include minor changes in unit cell parameters and/or a change in crystal symmetry, without a substantial change in structure. These minor effects, including changes in relative intensities, can also occur as a result of differences in cation content, framework composition, nature and degree of pore filling, thermal and/or hydrothermal history, and peak width/shape variations due to particle size/shape effects, structural disorder or other factors known to those skilled in the art of X-ray diffraction.

The support material of the invention preferably exhibits an equilibrium benzene adsorption capacity of greater than about 15 grams benzene/100 grams crystal at 6.7 kPa (50 torr) and 25°C. The equilibrium benzene adsorption capacity must, of course, be measured on a sample which exhibits no pore blockage by incidental contaminants. For example, water should be removed by dehydration techniques, e.g. thermal treatment, whereas inorganic amorphous materials, e.g. silica, and organics should be removed by contact with acid or base or other chemical agents and/or physical methods (such as, calcination) so that the detrital material is removed without detrimental effect on the material of the invention.

In general, crystalline support material of this invention has the following composition:

$$M_{n/q} (W_a X_b Y_c Z_d O_h)$$

wherein W is a divalent element, such as a divalent first row transition metal, e.g. manganese, cobalt, nickel, iron, and/or magnesium, preferably cobalt; X is a trivalent element, such as aluminum, boron, chromium iron and/or gallium, preferably aluminum; Y is a tetravalent element such as silicon and/or germanium, preferably silicon; Z is a pentavalent element, such as phosphorus; M is one or more ions, such as, for example, ammonium, Group IA, IIA and VIIB ions, usually hydrogen, sodium and/or fluoride ions; n is the charge of the composition excluding M expressed as oxides; q is the weighted molar average valence of M; n/q is the number of moles or mole fraction of M; a, b, c, and d are mole fractions of W, X, Y and Z, respectively; h is a number of from 1 to 2.5; and $(a+b+c+d) = 1$.

A preferred embodiment of the above crystalline material is when $(a+b+c)$ is greater than d, and h = 2. More preferably, when h = 2, a = 0 and d = 0.

In the as-synthesized form, the support material of this invention has a composition, on an anhydrous basis, expressed empirically as follows:

$$rRM_{n/q}(W_a X_b Y_c Z_d O_h)$$

wherein R is the total organic material used to assist in the synthesis of the material and not included in M as an ion, and r is the coefficient for R, i.e. the number of moles or mole fraction of R.

The M and R components are associated with the material as a result of their presence during crystallization, and are easily removed or, in the case of M, replaced by post-crystallization methods hereinafter more particularly described. For example, the original M, e.g. sodium or chloride, ions of the as-synthesized material of this invention can be replaced by ion exchange with other ions. Preferred replacing ions include metal ions, hydrogen ions, hydrogen precursor, e.g. ammonium, ions and mixtures thereof.

Support materials having the composition defined by the above formula can be prepared from a reaction mixture having a composition in terms of mole ratios of oxides, within the following ranges:

| Reactants | Useful | Preferred |
|---|---|---|
| $X_2O_3/YO_2$ | 0 to 0.5 | 0.001 to 0.5 |
| $X_2O_3/(YO_2+Z_2O_5)$ | 0.1 to 100 | 0.1 to 20 |
| $X_2O_3/(YO_2+WO+Z_2O_5)$ | 0.1 to 100 | 0.1 to 20 |
| Solvent/$(YO_2+WO+Z_2O_5+X_2O_3)$ | 1 to 1500 | 5 to 1000 |
| $OH^-/YO_2$ | 0 to 10 | 0 to 5 |
| $(M_{2/e}O+R_{2/f}O)/(YO_2+WO+Z_2O_5+X_2O_3)$ | 0.01 to 20 | 0.05 to 5 |
| $M_{2/e}O/(YO_2+WO+Z_2O_5+X_2O_3)$ | 0 to 10 | 0 to 5 |

(continued)

| Reactants | Useful | Preferred |
|---|---|---|
| $R_{2/f}O/(YO_2+WO+Z_2O_5+X_2O_3)$ | 0.01 to 2.0 | 0.03 to 1.0 |

wherein e and f are the weighted average valences of M and R, respectively, wherein the solvent is a $C_1$ to $C_6$ alcohol or diol, or, more preferably, water and wherein R comprises an organic directing agent having the formula $R_1R_2R_3R_4Q_+$ wherein Q is nitrogen or phosphorus and wherein at least one of $R_1$, $R_2$, $R_3$ and $R_4$ is aryl or alkyl group having 6 to 36 carbon atoms, e.g. $-C_6H_{13}$, $-C_{10}H_{21}$, $-C_{16}H_{33}$, and $-C_{18}H_{37}$, and each of the remainder of $R_1$, $R_2$, $R_3$ and $R_4$ is selected from hydrogen and an alkyl group having 1 to 5 carbon atoms. The compound from which the above ammonium or phosphonium ion is derived may be, for example, the hydroxide, halide, silicate or mixtures thereof.

The particular effectiveness of the above directing agent, when compared with other such agents known to direct synthesis of one or more other crystal structures, is believed due to its ability to function as a template in the nucleation and growth of the desired ultra-large pore materials. Non-limiting examples of these directing agents include cetyltrimethylammonium, cetyltrimethylphosphonium, octadecyltrimethylphosphonium, benzyltrimethylammonium, cetylpyridinium, myristyltrimethylammonium, decyltrimethylammonium, dodecyltrimethylammonium and dimethyldidodecylammonium compounds.

Preferably, the total organic, R, present in the reaction mixture comprises an additional organic directing agent in the form of an ammonium or phosphonium ion of the above directing agent formula but wherein each $R_1$, $R_2$, $R_3$ and $R_4$ is selected from hydrogen and an alkyl group of 1 to 5 carbon atoms (2 of the alkyl groups can be interconnected to form a cyclic compound). Examples of the additional organic directing agent include tetramethylammonium, tetraethylammonium, tetrapropylammonium, tetrabutylammonium and pyrrolidinium compounds. The molar ratio of the first-mentioned organic directing agent to the additional organic directing agent can be in the range 100/1 to 0.01/1. Where the additional organic directing agent is present, the molar ratio $R_{2/f}O/(YO_2+WO+Z_2O_5+X_2O_3)$ in the reaction mixture is preferably 0.1 to 2.0, most preferably 0.12 to 1.0.

In addition, to vary the pore size of the final crystalline phase material, the total organic, R, in the reaction mixture can include an auxiliary organic in addition to the organic directing agent(s) described above. This auxiliary organic is selected from (1) aromatic hydrocarbons and amines having 5-20 carbon atoms and halogen- and $C_1$-$C_{14}$ alkyl-substituted derivatives thereof, (2) cyclic and polycyclic aliphatic hydrocarbons and amines of 5 to 20 carbon atoms and halogen- and $C_1$-$C_{14}$ alkyl-substituted derivatives thereof and (3) straight and branched chain aliphatic hydrocarbons and amines having 3-16 carbon atoms and halogen-substituted derivatives thereof.

In the above auxiliary organics, the halogen substituent is preferably bromine. The $C_1$-$C_{14}$ alkyl substituent may be a linear or branched aliphatic chain, such as, for example, methyl, ethyl, propyl, isopropyl, butyl, pentyl and combinations thereof. Examples of these auxiliary organics include, for example, p-xylene, trimethylbenzene, triethylbenzene and triisopropylbenzene.

With the inclusion of the auxiliary organic in the reaction mixture, the mole ratio of auxiliary organic/$YO_2$ will be from 0.05 to 20, preferably from 0.1 to 10, and the mole ratio of auxiliary organic/organic directing agent(s) will be from 0.02 to 100, preferably from 0.05 to 35.

When a source of silicon is used in the synthesis method, it is preferred to use at least in part an organic silicate, such as, for example, a quaternary ammonium silicate. Non-limiting examples of such a silicate include tetramethylammonium silicate and tetraethylorthosilicate.

Non-limiting examples of various combinations of W, X, Y and Z contemplated for the above reaction mixture include:

| W | X | Y | Z |
|---|---|---|---|
| -- | Al | Si | -- |
| -- | Al | -- | P |
| -- | Al | Si | P |
| Co | Al | -- | P |
| Co | Al | Si | P |
| -- | -- | Si | -- |

including the combinations of W being Mg, or an element selected from the divalent first row transition metals, e.g. Mn, Co and Fe; X being B, Ga or Fe; and Y being Ge.

To produce the crystalline support material of the invention, the reaction mixture described above is maintained at a temperature of 25 to 250°C, preferably 50 to 175°C, and preferably a pH of 9 to 14 for a period of time until the required crystals form, typically 5 minutes to 14 days, more preferably 1 to 300 hours.

When the crystalline material of the invention is an aluminosilicate, the synthesis method conveniently involves the following steps:

(1) Mix the organic (R) directing agent with the solvent or solvent mixture such that the mole ratio of solvent/$R_{2/f}O$ is within the range of 50 to 800, preferably from 50 to 500. This mixture constitutes the "primary template" for the synthesis method.
(2) To the primary template mixture of step (1) add the silica and alumina such that the ratio of $R_{2/f}O/(SiO_2+Al_2O_3)$ is within the range 0.01 to 2.0.
(3) Agitate the mixture resulting from step (2) at a temperature of 20 to 40°C, preferably for 5 minutes to 3 hours.
(4) Allow the mixture to stand with or without agitation, preferably at 20 to 50°C, and preferably for 10 minutes to 24 hours.
(5) Crystallize the product from step (4) at a temperature of 50 to 150°C, preferably for 1 to 72 hours.

When used as a support material, the composition of the invention should be subjected to treatment to remove part or all of any organic constituent. Typically, this involves thermal treatment (calcination) at a temperature of 400 to 750°C for at least 1 minute and generally not longer than 20 hours, preferably from 1 to 10 hours. While subatmospheric pressure can be employed for the thermal treatment, atmospheric pressure is desired for reasons of convenience, such as in air, nitrogen and ammonia.

The properties of a typical feed of the instant application are disclosed in Table 2.

The feed to the process may generally be characterized as having a minimum boiling point of at least 500°F. (about 260°C) and usually will be neutral i.e., distillate, stocks with an end point of not more than 1000°F. (about 540°C), although residual lube stocks such as bright stock may also be treated by the same catalytic process. Hydroprocessed Light Neutral basestock is useful in the instant invention. Higher viscosity feedstocks low in sulfur are also suitable. Removal of undesirable aromatic components may be accomplished by solvent extraction using a solvent such as phenol, furfural or N,N-dimethylformamide (DMF). Dewaxing to the desired product pour point may be carried out using either solvent dewaxing or catalytic dewaxing techniques and it is particularly preferred that a hydrogenative treatment according to the present invention should follow any catalytic dewaxing treatment in order to saturate lube boiling range olefins which may be produced during the catalytic dewaxing process.

The mineral oil fraction is initially hydrotreated using a commercial catalyst such as nickel and molybdenium impregnated on $Al_2O_3$, then subjected to the hydrogenative treatment over the supported palladium catalyst.

The process according to the invention is preferably carried out at a temperature of 230-290°C (450-550°F); hydrogen circulation rates in the range 180 to 900 $Nm_3/m_3$ (1,000 to 5,000 scf/bbl), once through circulation being preferred in order to maximize the purity of the hydrogen; and space velocities from 0.3 to 0.5 LHSV. The products of the hydrogenation reaction have a low degree of unsaturation consistent with the hydrogenative treatment.

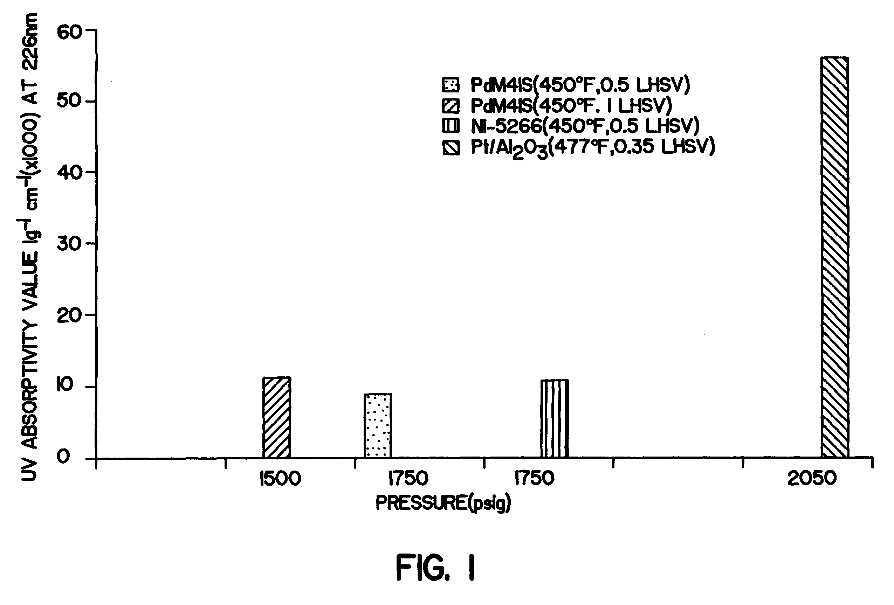

The invention will now be more particularly described with reference to the Examples and the accompanying drawings, in which Figures 1, 2 and 3 are graphical representations of testing results presented in Table 4.

In the Examples, percentages are by weight unless otherwise indicated.

### <u>EXAMPLE 1</u>

<u>Pd/M41S Catalyst Preparation</u>

A sample of a mesoporous crystalline material (40Å) was prepared in accordance with the method described below.

The following mixture was charged to an autoclave:

| | |
|---|---|
| 60.7pbw | Cetyltrimethylammonium (CTMA) hydroxide, prepared by contacting a 29wt.% N,N,N-trimethyl-1-hexadecylammonium chloride solution with a hydroxide-for-halide exchange resin |
| 1.3pbw | Sodium aluminate, |
| 30.4pbw | Tetramethylammonim silicate (10% aqueous solution), |
| 7.6pbw | Precipitated hydrated silica (HiSil™). |

The mixture was crystallized at 100°C for 20 hrs. with stirring under autogenous pressure. The resulting product was recovered by filtration and dried in air at ambient temperature. A sample of the product was calcined at 540°C for 1 hour in nitrogen, followed by 6 hours in air. The identity of the material as a member of the M41S class is confirmed from its properties.

The M41S crystalline product was formulated into a palladium-containing catalyst by the folowing method. A sample of the as-synthesized M41S material was ammonium exchanged and dried at 120°C overnight. The sample was extruded with alumina, dried overnight at 120°C and calcined in nitrogen for 6 hours at 480°C and in air for 12 hours at 540°C. The calcined sample was impregnated with $Pd(NH_3)_4Cl_2$ solution (about 1 wt% Pd) and then calcined at 300°C in air for 3 hours.

EXAMPLE 2

The catalyst of Example 1 and the following conventional catalysts were used to hydrogenate a hydrotreated base stock with the characteristics given in Table 2:

a) a commercial nickel catalyst on a silica/magnesia support as supplied by Engelhard Corporation (composition 31 wt% Ni, 32 wt% NiO, 24 wt% amorphous silica and 13 wt% MgO); and
b) $Pt/Al_2O_3$ catalyst.

TABLE 2

| Properties of Hydrotreated Basestock | | |
|---|---|---|
| UV Absorption Level | | Liters $g^{-1}m^{-1}$ (X1000)* |
| 226 nm | | 368 |
| 254 nm | | 16.6 |
| 275 nm | | 32.7 |
| 325 nm | | 1.29 |
| 400 nm | | <.1 |
| Sulfur, wt% | | <0.002 |
| Nitrogen, ppm | | 2 |
| Kinematic Viscosity, cS @ 40°C | | 26.75 |
| Kinematic Viscosity, cS @ 100°C | | 4.87 |
| Simulated Distillation | °F | °C |
| Initial Boiling Point | 514 | 268 |
| 1% Distilled | 570 | 299 |
| 5% Distilled | 639 | 337 |
| Final Boiling Point | 957 | 513 |

∗ UV absorption is a measure of the amount of aromatics present - these features are proportional for the limited range over which the data is presented.

The properties of the three catalysts are summarized in Table 3 below.

TABLE 3

| Relative Properties of the Catalysts Employed In Example 2 | | | | |
|---|---|---|---|---|
| Catalyst | Ni/silica-magnesia Engle-hard | | Pt/Al$_2$O$_3$ | Pd/M41S/Al$_2$O$_3$ |
| Metal | wt% | | | |
| Palladium | | | | 0.81 |
| Platinum | | | 0.89 | |
| Nickel | | 56 | | |
| Pore diameter | Å | 83 | 150 | 60 |
| Surface Area | m2/g | 250 | 234 | 614 |
| Real Density | g/cc | 4.59 | 3.256 | 2.38 |
| Particle Density | g/cc | 1.35 | 0.842 | 0.75 |
| Pore Volume | cc/g | 0.523 | 0.881 | 0.92 |

Pd/M41S contains 65 wt% M41S and 35 wt% alumina prior to the metal addition.

All catalysts were evaluated in a fixed bed pilot unit. A base stock with the characteristics given in Table 2 was used as the feed.

Table 4, below illustrates three different sets of data.

## TABLE 4

### Relative Characteristics of White Oils
### Produced by the Catalysts of Example 4

| | Pressure Varied | | | | Liquid Hourly Space Velocity Varied | | | | | Temperature Varied | | | | |
|---|---|---|---|---|---|---|---|---|---|---|---|---|---|---|
| | Ni/silica-alumina | Pt/Al$_2$O$_3$ | Pd/M41S | Pd/M41S | Ni/silica-alumina | Ni/silica-alumina | Pt/Al$_2$O$_3$ | Pd/M41S | Pd/M41S | Pd/M41S | Ni/silica-alumina | Pt/Al$_2$O$_3$ | Pd/M41S | Pd/M41S |
| Temp (°F) °C | (450) 232.2 | (477) 247.2 | (450) 232.2 | (450) 232.2 | (450) 232.2 | (450) 232.2 | (500) 260 | (450) 232.2 | (450) 232.2 | (500) 260 | (450) 232.2 | (502) 261.1 | (350) 176.7 | (400) 204.4 |
| LHSV (vol/vol/hr) | 0.5 | 0.35 | 1 | 0.5 | 0.5 | 0.25 | 0.28 | 0.5 | 1 | 0.5 | 0.25 | 0.302 | 0.5 | 0.5 |
| Pressure (psig) bar | (1750) 121.7 | (2050) 142.4 | (1500) 104.5 | (1750) 121.7 | (2000) 138.9 | (2200) 152.7 | (2300) 159.6 | (2200) 157.2 | (1500) 104.5 | (2200) 152.7 | (2200) 152.7 | (2025) 140.7 | (2200) 152.7 | (2200) 152.7 |
| UV Absorption Level cm$^{-1}$ (X1000) 226 nm | 10 | 54.3 | 10.9 | 8.7 | 7.6 | 6.69 | 41.4 | 3.8 | 10.9 | 4.0 | 6.6 | 32.4 | 21 | 8.8 |
| 254 nm | 0.475 | 1.35 | 0.28 | 0.45 | | 0.246 | 1.1 | 0.41 | 0.28 | | | 1.1 | | |
| 275 nm | 0.73 | 3.76 | 0.6 | 0.56 | | 0.44 | 2.86 | 0.32 | 0.6 | | | 3.06 | | |
| 325 nm | <.1 | <.1 | <.1 | <.1 | | <.1 | <.1 | <.1 | <.1 | <.1 | <.1 | <.1 | <.1 | <.1 |
| 400 nm | <.1 | <.1 | <.1 | <.1 | | <.1 | <.1 | <.1 | <.1 | <.1 | <.1 | <.1 | <.1 | <.1 |
| Sulfur, ppm | <2 | <2 | <2 | <2 | <2 | <2 | <2 | <2 | <2 | <2 | <2 | <2 | <2 | <2 |

EP 0 736 079 B1

Case I

In Case I, pressure was varied: It was decreased substantially when Pd/M41S was used. Temperature and space velocity were held constant or only slightly varied for each catalyst. The temperature was held between 230-260°C (450-500°F), and LHSV was held between 0.25 and 1.0 LHSV. Pressure for Ni/silica-alumina and Pt/Al$_2$O$_3$ was held at about 14235 kPa (2050 psig), but for Pd/M41S it was lowered, first to 12170 kPa (1750 psig), then to 10445 (1500 psig). The products were measured for total aromatic content (UV signal at 325-400 nm). The UV absorption data indicates similar levels of polynuclear aromatics (PNA) and total aromatic content for Pd/MCM-41 and Ni/silica-alumina. White oils produced using Pt/Al$_2$O$_3$ had a much higher level of aromatics. Figure 1 illustrates the lowest UV absorption value being that obtained by using Pd/M41S at 12170 kPa (1750 psig).

Case II

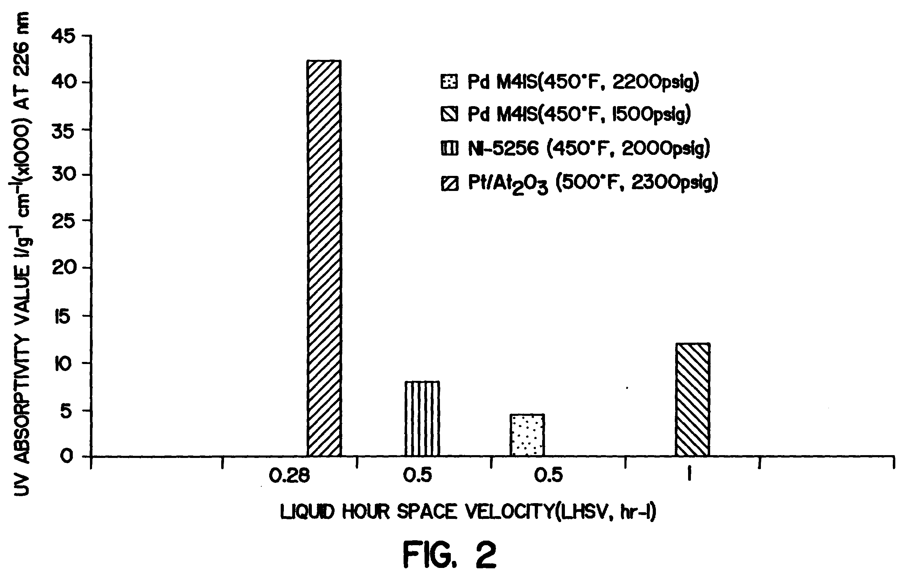

In Case II, space velocity (LHSV) was varied significantly for Pd/M41S. It was approximately double the space velocity used for Ni/silica-alumina and Pt/Al$_2$O$_3$ in one run involving Pd/M41S and quadruple the space velocity used for Ni/silica-alumina and Pt/Al$_2$O$_3$ in a second run involving Pd/M41S. The temperature was held between 230-260°C (450-500°F). The pressure was held between 15270-15960 kPa (2200-2300 psig) for each catalyst, including Pd/M41S in the instance in which the space velocity was doubled. In the instance in which the space velocity was quadrupled, pressure was decreased to 10445 (1500 psig). At higher space velocity and lower pressure, Pd/M41S produced a product with UV absorption levels similar to those of Ni/silica-alumina at 0.25 LHSV. Therefore Pd/M41S produces a white oil similar in characteristics to that of the nickel catalyst, i.e. both are low in total and polynuclear aromatics. Pd/M41S operates at far less severe conditions. There is little difference, however, between the aromatics content of the oil produced using Pd/M41S at 15270 kPa (2200 psig) and the aromatics content of the oil produced using Pd/M41S at 10445 kPa (1500 psig). Lower pressures are therefore preferred. Figure 2 presents a graphical comparison of the catalysts and conditions.

Case III

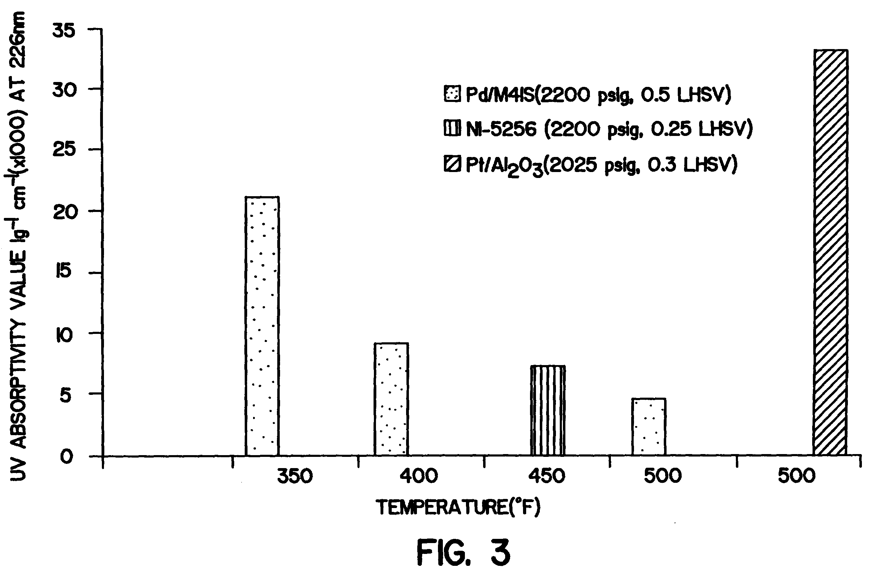

In Case III, the temperature was increased slightly and the pressure also increased in the run involving Pt/Al$_2$O$_3$. These conditions were more severe than those employed in the case of the nickel catalyst or Pd-M41S, yet the oil produced employing Pt/Al$_2$O$_3$ contains more aromatics than the oil produced using either of the other catalysts. Figure 3 illustrates the relative effects of temperature variation for the three catalysts involved.

**Claims**

1. A process for preparing a food grade white oil, comprising contacting an aromatics-containing hydrotreated mineral oil fraction, resulting from atmospheric or vacuum distillation of crude oil, under severe conditions, in the presence of hydrogen, with a catalyst comprising up to 1 wt% of palladium supported on an extruded mixture of alumina and an inorganic, non-layered, porous, crystalline phase material having pores with diameters of at least 13Å and exhibiting, after calcination, an x-ray diffraction pattern with at least one d-spacing greater than about 18Å with a relative intensity of 100, said severe conditions including a temperature in the range 121 to 371°C (250-700°F), a pressure in the range 35.5-207.9 bar (500-3000 psig) and a liquid hourly space velocity of 0.1-2.0 hr$^{-1}$, and withdrawing a product containing less aromatics than said mineral oil fraction and having an API gravity of 29-32 and a kinematic viscosity in the range 10-600 cS at 37.7°C (100°F).

2. A process according to claim 1 wherein the space velocity is in the range 0.3-0.5 hr$^{-1}$.

3. A process according to claim 1 or claim 2 wherein said mineral oil fraction is a hydrogenated bright stock, light neutral stock or residual stock.

4. A process according to any preceding claim wherein the mineral oil is dewaxed before hydrogenation.

5. A process according to any preceding claim wherein the hydrogenated mineral oil has a boiling range from 260 to 540°C (500-1000°F).

**Patentansprüche**

1. Verfahren zur Herstellung von Weißöl mit Lebensmittelqualität, welches umfaßt: Kontakt einer Aromaten enthaltenden, dem Hydrotreating unterzogenen Mineralölfraktion, die von der atmosphärischen oder Vakuumdestillation von Rohöl stammt, unter strengen Bedingungen in Gegenwart von Wasserstoff mit einem Katalysator, der bis zu 1 Gew.-% Palladium, getragen auf einer extrudierten Mischung von Aluminiumoxid und einem anorganischen, ungeschichteten, porösen Material mit kristalliner Phase umfaßt, das Poren mit Durchmessern von mindestens 13 Å hat und nach dem Kalzinieren ein Röntgenbeugungsdiagramm mit mindestens einem d-Abstand von mehr als etwa 18 Å mit einer relativen Intensität von 100 hat, wobei die strengen Bedingungen eine Temperatur im Bereich von 121 bis 371°C (250 bis 700°F), einen Druck im Bereich von 35,5 bis 207,9 bar (500 bis 3000 psig) und eine stündliche Flüssigkeits-Raum-Geschwindigkeit von 0,1 bis 2,0 $h^{-1}$ umfassen; und Abziehen eines Produktes, das weniger Aromaten als die Mineralölfraktion enthält und einen API-Grad von 29 bis 32 und eine kinematische Viskosität im Bereich von 10 bis 600 cSt bei 37,7°C (100°F) hat.

2. Verfahren nach Anspruch 1, wobei die Raumgeschwindigkeit im Bereich von 0,3 bis 0,5 $h^{-1}$ liegt.

3. Verfahren nach Anspruch 1 oder Anspruch 2, wobei die Mineralölfraktion ein hydriertes Brightstock-Material, ein leichtes neutrales Material oder ein Rückstandsmaterial ist.

4. Verfahren nach einem der vorstehenden Ansprüche, wobei das Mineralöl vor dem Hydrieren entparaffiniert wird.

5. Verfahren nach einem der vorstehenden Ansprüche, wobei das hydrierte Mineralöl einen Siedebereich von 260 bis 540°C (500 bis 1000°F) hat.

**Revendications**

1. Procédé de préparation d'une huile blanche de qualité alimentaire, qui comprend la mise en contact d'une fraction d'huile minérale hydrotraitée contenant des aromatiques, qui provient d'une distillation atmosphérique ou sous vide d'une huile brute, dans des conditions sévères, en présence d'hydrogène, avec un catalyseur comprenant jusqu'à 1% en poids de palladium supporté sur un mélange extrudé d'alumine et d'un matériau poreux inorganique en phase cristalline qui ne présente pas de couches, qui a des pores ayant un diamètre d'au moins 13Å et qui présente, après calcination, un spectre de diffraction des rayons-X ayant au moins une distance d supérieure à environ 18Å avec une intensité relative de 100, ces conditions sévères comprenant une température comprise dans la gamme de 121 à 371°C (250 à 700°C), une pression comprise dans la gamme de 35,5 à 207,9 bar (500 à 3000 psig) et une vitesse spatiale horaire liquide de 0,1 à 2,0 $h^{-1}$, et le soutirage d'un produit contenant moins d'aromatiques que cette fraction d'huile minérale, et ayant une densité API de 29 à 32 et une viscosité cinématique comprise dans la gamme de 10 à 600 cS à une température de 37.7°C (100°F).

2. Un procédé suivant la revendication 1, dans lequel la vitesse spatiale est dans la gamme de 0.3 à 0.5 $h^{-1}$.

3. Un procédé suivant les revendications 1 ou 2, dans lequel ladite fraction d'huile minérale est une fraction neutre légère, une fraction résiduaire ou une huile lubrifiante de base hydrogénée.

4. Un procédé suivant l'une quelconque des revendications précédentes, dans lequel l'huile minérale est déparaffinée avant hydrogénation.

5. Un procédé suivant l'une quelconque des revendications précédentes, dans lequel l'huile minérale hydrogénée a une gamme de point d'ébullition comprise entre 260°C et 540°C (500-1000°F).

FIG. I

Legend:
- PdM4iS (450°F, 0.5 LHSV)
- PdM4iS (450°F, 1 LHSV)
- N-5266 (450°F, 0.5 LHSV)
- Pt/Al$_2$O$_3$ (477°F, 0.35 LHSV)

Y-axis: UV ABSORPTIVITY VALUE lg$^{-1}$ cm$^{-1}$ (x1000) AT 226nm (0, 10, 20, 30, 40, 50, 60)

X-axis: PRESSURE(psig) (1500, 1750, 1750, 2050)

FIG. 2

Legend:
- Pd M4lS(450°F, 2200psig)
- Pd M4lS(450°F, I500psig)
- N-5256 (450°F, 2000psig)
- Pt/Al₂O₃ (500°F, 2300psig)

X-axis: LIQUID HOUR SPACE VELOCITY(LHSV, hr-l)
X-axis labels: 0.28, 0.5, 0.5, I

Y-axis: UV ABSORPTIVITY VALUE l/g⁻¹ cm⁻¹(x1000) AT 226 nm
Y-axis labels: 0, 5, 10, I5, 20, 25, 30, 35, 40, 45

FIG. 3

EP 0 736 079 B1